# EUROPÄISCHE PATENTSCHRIFT

(11) **EP 1 051 613 B1**
(45) Veröffentlichungstag und Bekanntmachung des Hinweises auf die Patenterteilung: **22.06.2011**
(21) Anmeldenummer: 99950555.5
(22) Anmeldetag: 27.09.1999
(51) Int. Cl.: G01N 29/04

(54) **Vorrichtung zur Ultraschallprüfung von Blattgut**
Device for examining sheet-like articles using ultrasound
Dispositif pour le controle par ultrasons d'articles en forme de feuilles

(30) Priorität: 28.09.1998 DE 19844447
(43) Veröffentlichungstag der Anmeldung: 15.11.2000
(73) Patentinhaber: Giesecke & Devrient GmbH, 81677 München (DE)
(72) Erfinder: HORNUNG, Heinz, D-82205 Gilching (DE); SCHANDA, Ulrich, D-83607 Holzkirchen (DE)
(74) Vertreter: Vierheilig, Achim
(86) Internationale Anmeldenummer: PCT/EP1999/007164
(87) Internationale Veröffentlichungsnummer: WO 2000/019191

(56) Entgegenhaltungen:
- EP-A- 0 167 010
- EP-A- 0 740 154
- FR-A- 2 126 793
- US-A- 4 446 735

## Beschreibung

Die Erfindung betrifft eine Vorrichtung zur Prüfung von Blattgut, insbesondere Banknoten, umfassend eine Einrichtung zum Transport des Blattguts in einer definierten Richtung, wenigstens ein Schallwandlerpaar mit einem Sender, der das Blattgut mit Schallwellen beaufschlagt und einem Empfänger, der den durch das Blattgut transmittierten Schallanteil detektiert, wobei Sender und Empfänger in bezug auf die Transportebene schräg zueinander angeordnet sind.

Eine Vorrichtung der oben genannten Art ist z.B. aus der EP 0 167 010 A2 bekannt. Ein Schallsender strahlt auf das bewegte Blattgut Ultraschallwellen ab, wobei der durch das Meßgut transmittierte Schallanteil von einem Empfänger erfaßt wird. Die erfaßte Schallintensität wird als Maß für die Bestimmung der Dicke und/ oder des Flächengewichts des Blattguts ausgewertet. Sender, Meßgut und Empfänger sind derart schräg zueinander angeordnet, daß die an diesen Elementen reflektierten Schallanteile aus dem Strahlengang zwischen Sender und Empfänger (Meßpfad) ausgeblendet werden. Zusätzliche Einrichtungen, wie z.B. Schallfallen bzw. Schallspiegel, sorgen dafür, daß die ausgeblendeten Schallanteile nicht wieder in den Meßpfad zurückkehren können. Die Verwendung solcher zusätzlicher Einrichtungen ist jedoch relativ aufwendig und benötigt zusätzlichen Platz.

Darüber hinaus ist aus der EP 0 740 154 A1 ein Ultraschallsensor für Photographisches Film- und Papiermaterial bekannt, bei der ein Ultraschallsender schräg auf das bewegte Material einstrahlt und ein gegenüber liegender Ultraschallempfänger die transmittierte Ultraschallintensität erfasst. Dabei limitiert ein absorbierendes Schaummaterial an der Front des Ultraschallsenders sowohl die von dem Ultraschallsensor nach außen dringende als auch die von außen eindringende Schallintensität.

Der Erfindung liegt die Aufgabe zugrunde, eine Vorrichtung zur Prüfung von Blattgut vorzuschlagen, die mit geringem technischem Aufwand eine gute Signalausbeute ermöglicht und kompakt aufgebaut ist. Erfindungsgemäß wird die Aufgabe durch die in dem unabhängigen Anspruch angegebenen Merkmale gelöst.

Der Grundgedanke der Erfindung besteht darin, daß die von einem Schallwandler abgestrahlten Schallwellen in einen Transportkanal eingeleitet werden, in dem das zu prüfende Blattgut während der Beschallung bewegt wird, wobei der vom Blattgut reflektierte Schallanteil in seiner Ausbreitung durch den Transportkanal derart begrenzt wird, daß während der Beschallung des Blattguts dieser Schallanteil nicht zum Empfänger gelangen kann. Vorzugsweise erzeugt der Wandler eine Schallkeule mit geringem Öffnungswinkel, wobei die von dem Schallwandler abgestrahlten Schallwellen nicht direkt auf die den Schall reflektierenden Innenflächen des Transportkanals auftreffen. Durch die Vorsehung eines Transportkanals werden Störungen des Meßsignals aufgrund vagabundierender Schallwellen, die nicht zur Messung beitragen sollen, vermieden. Durch den Transportkanal kann dies mit geringem technischen Aufwand erreicht werden, da auf zusätzliche Einrichtungen, wie z. B. Schallfallen bzw. Schallspiegel verzichtet werden kann. Weiterhin kann aufgrund dessen, daß die Transportebene frei von schallabsorbierenden Materialien ist, der Transportkanal so eng ausgeführt werden, daß der Schallsender und Empfänger relativ nahe zueinander angeordnet werden können. Da der größte Teil der vom Sender abgestrahlten Schallwellen vom Meßgut reflektiert wird und nur ein geringer Teil (im Bereich weniger Prozent) bei einer Transmissionsmessung das Meßgut passiert, wird die Signalausbeute der Messung durch den geringen Abstand zwischen Sender und Empfänger verbessert. Dadurch erhöht sich bei konstantem Hintergrundrauschen das Signal-/Rauschverhältnis, was die Auswertung des Meßsignals erleichtert.

Vorzugsweise erfolgt die Prüfung über die gesamte Breite des Blattguts, wobei das in Längsrichtung bewegte Blattgut senkrecht zur Transportrichtung in mehreren Meßspuren abgetastet werden kann. Dies ermöglicht z. B. die Feststellung von Klebestreifen auf Banknoten oder von Rissen oder Löchern in den Banknoten oder auch von Z-Falten oder Eselsohren, was für die Prüfung der Banknoten hinsichtlich ihres Zustands wichtig ist.

Die Schallwandlerpaare (Sender und Empfänger) werden in einem Abstand zueinander angeordnet, der groß im Vergleich zu dem Abstand der Innenflächen, d. h. der Höhe des Transportkanals ist. Der Abstand der Innenflächen des Transportkanals ist so gewählt, daß der Schallanteil, der von dem Blattgut reflektiert wird, zwischen einer Innenfläche des Kanals und dem Blattgut mehrmals reflektiert wird, wobei mit zunehmender Anzahl der Reflexionen die Schallintensität stark abnimmt und dadurch die Leistung des Schallanteils, der in eine benachbarte Meßspur gelangen kann, vernachlässigbar ist. Da diese Bedingung von vielen Faktoren abhängt, beispielsweise der Oberflächenbeschaffenheit der Innenflächen des Transportkanals, dem maximalen Austrittswinkel des Schalls bzw. dem Reflexionsfaktor des schallabsorbierenden Materials kann diese Bedingung nur als Richtlinie angegeben werden, wobei der Abstand zwischen zwei benachbarten Meßspuren mindestens 5 mal so groß wie die Transportkanalhöhe sein sollte.

Der Schallwandler wird durch ein elastisches Element in seiner Position im Gehäuse so gehalten, daß der Schwingkörper bei entsprechender Anregung nahezu keine Dämpfung durch die Halterung des Gehäuses erfährt und dennoch die Schallachse des Senders exakt zum Empfänger ausgerichtet wird. Dadurch kann auch bei Verwendung von kleinen Schallwandlern mit geringerer Schalleistung noch eine ausreichende Signalausbeute erzielt werden. Bei einer mehrspurigen Prüfung des Blattguts werden die Schallwandler vorzugsweise auf einem gemeinsamen elastischen Element angeordnet, das z. B. aus einem Schaumstoffmaterial besteht. Beispielsweise ist das elastische Element auf der den Wandlern abgewandten Seite auf einer Platine angeordnet, wobei die Anschlüsse der Wandler über elektrische Leiter, die z. B. durch das Schaumstoffmaterial geführt sind, mit der Platine verbunden sind. Die Schallwandler sind von einem Gehäuse umgeben, das die Wandler in ihrer Lage definiert, wobei das Gehäuse lösbar mit der Platine verbunden ist. Dadurch können die Ultraschallwandler in einfacher Weise gewechselt werden, wodurch die Wartungsfreundlichkeit verbessert wird. Weitere Vorteile sowie Weiterbildungen der Erfindung ergeben sich aus den abhängigen Ansprüchen sowie der nachfolgenden Beschreibung und Ausführungsbeispielen der Erfindung anhand der beigefügten Figuren.

Darin zeigen:
- Fig. 1: das Funktionsprinzip einer Vorrichtung zur Prüfung von Blattgut,
- Fig. 2: ein Ausführungsbeispiel einer Vorrichtung mit mehreren Meß- spuren,
- Fig. 3a, 3b: ein Ausführungsbeispiel einer Senderanordnung.

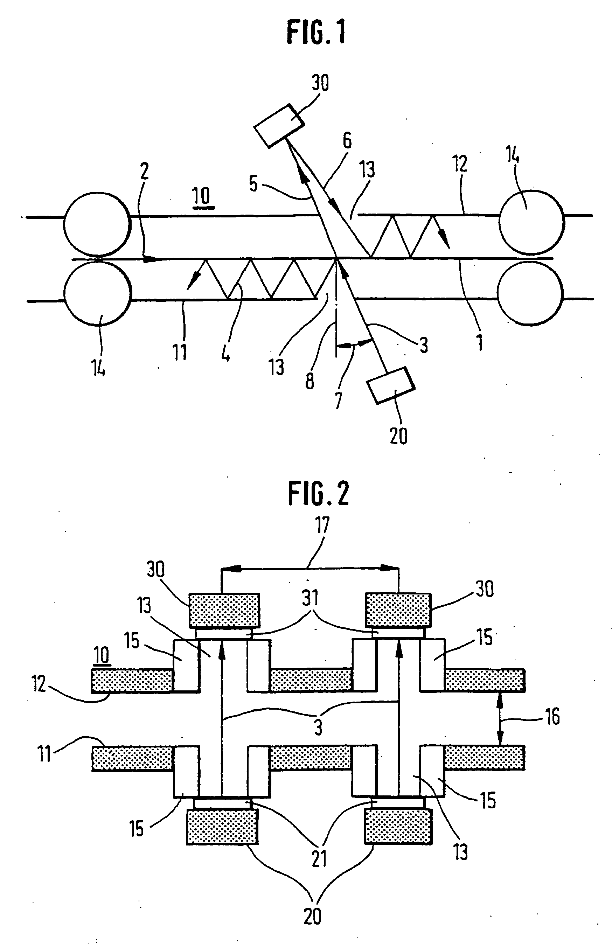

Fig. 1 zeigt beispielhaft in schematischer Darstellung das Funktionsprinzip der erfindungsgemäßen Vorrichtung. Das Blattgut 1, z. B. eine Banknote, wird von den angedeuteten Transportrollen 14 in einem Transportkanal 10 in einer definierten Richtung 2 zwischen einem Sender 20 und einem Empfänger 30, die unterhalb bzw. oberhalb des Transportkanals angeordnet sind, hindurch bewegt. Sender und Empfänger sind relativ zu dem Transportkanal derart angeordnet, daß die von dem Sender in Richtung des Pfeils 3 abgestrahlten Schallwellen durch eine Öffnung 13 im Transportkanal unter einem von Null verschiedenen Winkel 7, bezogen auf das Lot 8 im Auftreffpunkt des Senderschalls, auf das Blattgut 1 auftreffen. Der Sender 20 kann beispielsweise mit einer Betriebsfrequenz im Bereich von 150 - 250 kHz vorzugsweise mit der Resonanzfrequenz betrieben werden. Durch den Betrieb im Resonanzbereich wird eine hohe Schalleistung mit einem engen Frequenzspektrum erhalten, was bei einer Transmissionsmessung vorteilhaft ist. Der vom Blattgut reflektierte Schallanteil 4 des Senderschalls trifft dabei entsprechend der Reflexionsbedingung (Einfallswinkel = Ausfallswinkel) auf die Innenfläche 11 des Transportkanals, an der er reflektiert wird und auf das Blattgut wieder auftrifft. Der Schallanteil 4 wird somit auf kontrolliertem Weg zwischen der Innenfläche 11 des Transportkanals und dem Blattgut mehrfach reflektiert. Bei jeder Reflexion wird der Schallanteil 4 gestreut, wodurch die Intensität des Schallanteils 4 mit zunehmender Anzahl der Reflexionen stark abnimmt und damit vernachlässigbar wird. Der Schallanteil 4 stört somit nicht die Transmissionsmessung. Zur Prüfung des Blattguts, beispielsweise hinsichtlich der Dicke und/oder des Flächengewichts, wird der durch das Blattgut transmittierte Schallanteil 5 von dem Empfänger 30 erfaßt und von einer nicht dargestellten Einrichtung ausgewertet. Zur Veranschaulichung ist in Fig. 1 der Empfänger 30 gegenüber der Richtung des Schallanteils 5 derart geneigt, daß der am Empfänger reflektierte Schallanteil 6 eine von dem Schallanteil 5 unterschiedliche Richtung aufweist. Der vom Empfänger reflektierte Schallanteil 6 trifft hierbei auf das Blattgut auf und wird entsprechend der Reflexionsbedingung (Einfallswinkel = Ausfallswinkel) von diesem reflektiert, wodurch der Schallanteil 6 auf die Innenfläche 12 des Transportkanals auftrifft und zwischen dieser Innenfläche und dem Blattgut mehrmals reflektiert wird, wie dies bereits in Zusammenhang mit dem Schallanteil 4 beschrieben worden ist. Durch den Transportkanal kann der Schallanteil 4 bzw. 6 nicht zum Empfänger gelangen. Außerdem wird durch den Transportkanal eine Abschirmung geschaffen, so daß Störungen von außerhalb der Prüfvorrichtung keinen nennenswerten Einfluß auf die Prüfung ausüben können. Der Schallanteil 6 kann jedoch aufgrund des geringen Transmissionsgrades bei Blattgut, beispielsweise liegt dieser im Bereich weniger Prozent, im Unterschied zu dem Schallanteil 4 vernachlässigt werden.

Aufgrund des geringen Transmissionsgrades des Blattguts, beispielsweise verringert das Blattgut den vom Empfänger erfaßten und vom Sender abgegebenen Schallpegel um 40 dB, können Sender und Empfänger auch parallel zueinander angeordnet werden, ohne daß das Meßergebnis dadurch verfälscht wird.

Fig. 2 zeigt eine erfindungsemäße Vorrichtung mit mehreren Sendern 20 und Empfängern 30, die entlang des Transportkanals 10 senkrecht zu der hier nicht dargestellten Transportrichtung angeordnet sind. Die Sender 20 besitzen alle die gleiche Abstrahlcharakteristik und unterscheiden sich auch sonst nicht. Dies gilt entsprechend auch für die Empfänger 30. Der linke Sender 20 mit dem gegenüber angeordneten Empfänger 30 bildet das erste Schallwandlerpaar einer ersten Meßspur. Beipielhaft sind hier zwei Meßspuren dargestellt, selbstverständlich können auch drei oder vier oder noch mehr Meßspuren vorgesehen werden. Dies ist abhängig von dem für die Prüfvorrichtung zur Verfügung stehenden Platz und von den Abmessungen des Blattguts. Selbstverständlich sind die durch die Meßspuren definierten Erkennungsbereiche der Prüfvorrichtung in Bezug auf das Blattgut so zu wählen, daß Mehrfachabzüge, Klebestreifen auf dem Blattgut, Z-Falten oder Risse in dem Blattgut erkannt werden. Auf der den Öffnungen 13 des Transportkanals 10 zugewandten Stirnfläche der Schallwandler 20 bzw. 30 ist jeweils eine Schicht 21 bzw. 31 angebracht. Die Schicht 21 bzw. 31 besteht z. B. aus einem dämpfenden Material und ist optional und dient der zusätzlichen Dämpfung eventueller sich ausbildender stehender Schallwellen. Der Schwingkörper kann z. B. ein Piezokaramikkörper sein, der elektrisch von einer hier nicht dargestellten Schaltung zu Ultraschallschwingungen angeregt wird. Der Schall 3 wird im wesentlichen nur auf der Seite der Schicht 21 abgestrahlt. Bei einer mehrspurigen Prüfvorrichtung sind die Abmessungen der Schallwandler so klein wie möglich zu wählen, jedoch muß noch eine ausreichende Signalausbeute bzw. Empfindlichkeit der Messung gewährleistet sein. Die Abmessungen der Wandler sind im allgemeinen durch die Betriebsfrequenz und das Material der Wandler vorgegeben. Mit den Abmessungen des Ultraschallwandlers ist auch die Größe und Form der Schallabstrahlfläche des Wandlers bestimmt, wobei diese sowie die effektiven geometrischen Abmessungen des Schallkanals im wesentlichen den Öffnungswinkel der erzeugten Schallkeule definieren. Der Öffnungswinkel des von dem Sender 20 abgestrahlten Schalls 3 soll nach Möglichkeit so klein gewählt werden, daß nur der direkte, in einer engen Schallkeule abgestrahlte Schall 3 auf den Empfänger 30 gelangt. Die schallführenden Öffnungen 13 des Transportkanals 10 können aus dem gleichen Material wie der Transportkanal bestehen, beispielsweise in dem die Öffnungen einfach in den Transportkanal gefräst oder gebohrt werden. Zusätzlich können aber auch die Wände der Öffnungen 13 mit einem schalldämpfenden Material 15 versehen werden. Dadurch wird erreicht, daß Reflexionen an den Wänden der Öffnungen unterdrückt werden. Die Vorsehung des schalldämpfenden Materials 15 ist jedoch nicht zwingend, sondern abhängig vom Öffnungswinkel der vom Sender abgestrahlten Schallkeule sowie der Dicke der Begrenzungsflächen 11 und 12 und dem Abstand 16 der Begrenzungsflächen zueinander. Da insbesondere bei einer Transmissionsmessung die Empfindlichkeit bzw. Signalausbeute der Messung mit zunehmendem Abstand zwischen Sender und Empfänger abnimmt, ist der Abstand 16 zwischen den Begrenzungsflächen 11 und 12 des Transportkanals 10 so klein wie möglich zu wählen, jedoch sollte noch ein störungsfreier Transport des Blattguts innerhalb des Transportkanals sichergestellt sein. Selbstverständlich ist der Abstand 16 zwischen den Begrenzungsflächen von der Dicke des zu prüfenden Blattguts abhängig. Bei der Prüfung von Banknoten kann dieser Abstand beispielsweise 1 mm - 5 mm betragen. Durch die enge Ausführung des Transportkanals wird der vom Blattgut reflektierte Schallanteil zwischen der Innenfläche 11 des Transportkanals und dem zu prüfenden Blattgut, das hier nicht dargestellt ist, sehr oft reflektiert. Bei jeder Reflexion wird dieser im Transportkanal verbleibende Schallanteil gestreut, wodurch die Intensität des Schalls mit der Anzahl der Reflexionen abnimmt. Die Schalleistung des Schallanteils, der von einer Meßspur in die andere Meßspur gelangen kann, ist somit in Bezug auf das Meßergebnis vernachlässigbar und kann daher das Meßergebnis nicht verfälschen. Der Abstand 17 der Schallwandlerpaare bzw. der Meßspuren zueinander ist groß gegenüber der Höhe 16 des Transportkanals, beispielsweise sollte der Abstand zwischen zwei benachbarten Meßspuren mindestens 5 mal so groß wie die Höhe des Transportkanals sein.

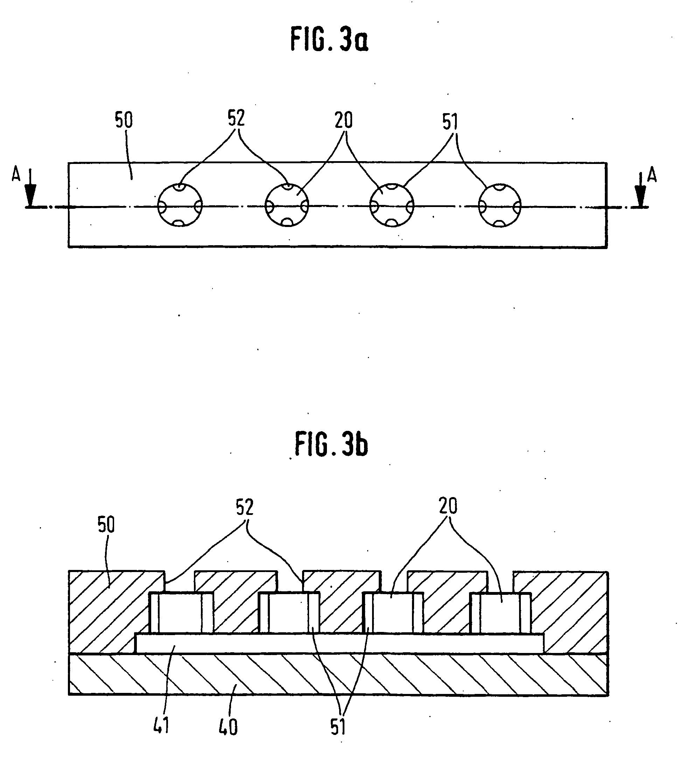

Fig. 3a, b zeigen ein Ausführungsbeispiel einer erfindungsgemäßen Ultraschallwandleranordnung, wie sie im Zusammenhang mit der in Fig. 1 und 2 beschriebenen Vorrichtung zur Prüfung von Blattgut verwendet werden kann. Fig. 3a zeigt in einer Aufsicht ein Ausführungsbeispiel einer Schallwandleranordnung mit einem Gehäuse 50, welches zur Prüfebene offene Einschübe 51 bzw. Hohlräume zur Ausnahme der Wandler 20 aufweist. Jeder Wandler wird über entsprechende Noppen 52 in seiner Position fixiert.

Fig. 3b zeigt die Schallwandleranordnung in einer Schnittdarstellung. Die Schnittlinie A-A ist in Fig. 3a dargestellt. Das Gehäuse 50 ist über einen hier nicht dargestellten Schnappverschluß lösbar mit der Platine 40 verbunden. Die Ultraschallwandleranordnung umfaßt eine Vielzahl von Wandlern 20, die in einem vorzugsweise äquidistanten Abstand nebeneinander angeordnet sind. In dem hier gezeigten Ausführungsbeispiel sind z. B. vier Sender auf einem gemeinsamen elastischen Element 41 angeordnet. Das Element 41 kann beispielsweise aus Schaumstoff bestehen, der auf einer Platine 40 angeordnet ist. Selbstverständlich kann auch jeder Sender 20 auf einem einzelnen elastischen Element 41, z. B. einer Feder, angeordnet werden. In beiden Fällen werden die Schallwandler auf der der schallabstrahlenden bzw. schallempfangenden Seite gegenüberliegenden Seite des Wandlers auf dem elastischen Element angeordnet. Die schallabstrahlende Seite der Wandler 20 kann zusätzlich mit einer hier nicht dargestellten schalldämpfenden Schicht versehen werden. Diese Schicht ist optional und dient der Vermeidung stehender Wellen. Die Schallwandler 20 werden zwischen den Befestigungsnoppen 52 und dem elastischen Element 41 derart positioniert, daß die Schallachsen der Sender exakt zu den hier nicht dargestellten Empfängern ausgerichtet sind. Dabei verbleibt an den Seitenwänden der Wandler ein Hohlraum 51. Der Hohlraum hat die Form eines Hohlzylinders, dessen Durchmesser größer als der Durchmesser des Wandlers ist. Dies hat den Vorteil, daß die Schallwandler 20 im Betrieb durch die Halterung keine nennenswerte Dämpfung erfahren, da die Wandler nahezu frei schwingbar mit einer Kraft, die beispielsweise der 5-fachen Gewichtskraft des Wandlers entspricht, gehalten werden. Die erfindungsgemäße Halterung der Wandler ermöglicht, daß die im Resonanzbereich von den Schallwandlern abgegebene Schalleistung nur unwesentlich reduziert wird. Dadurch kann auch bei einer Transmissionsmessung mit kleinen Schallwandlern noch eine gute Signalausbeute erzielt werden.

## Patentansprüche

1. Vorrichtung zur Prüfung von Blattgut, insbesondere Banknoten, umfassend eine Einrichtung (14) zum Transport des Blattguts (1) in einer definierten Richtung (2), wenigstens ein Schallwandlerpaar (20, 30) mit einem Sender (20), der das Blattgut (1) mit Schallwellen (3) beaufschlagt und einem Empfänger (30), der den durch das Blattgut transmittierten Schallanteil (4) detektiert, wobei Sender und Empfänger in Bezug auf die Transportebene schräg zueinander angeordnet sind, wobei
- ein Transportkanal (10) vorgesehen ist, der mit Öffnungen (13) versehen ist, durch die der vom Sender (20) abgestrahlte Schall (3) auf das in dem Transportkanal von der Transporteinrichtung (14) bewegte Blattgut auftrifft und der durch das Blattgut transmittierte Schallanteil (5) zum Empfänger (30) gelangt, wobei der vom Blattgut (1) reflektierte Schallanteil (4) in seiner Ausbreitung durch wenigstens eine der in einem bestimmten Abstand (16) parallel angeordneten, den Schall reflektierenden Innenflächen (11,12) des Transportkanals derart begrenzt wird, daß während der Beschallung des Blattguts dieser Schallanteil (4) nicht zum Empfänger (30) gelangen kann,
- senkrecht zur Transportrichtung (2) entlang des Transportkanals (10) mehrere Schallwandlerpaare (20, 30) nebeneinander in einem bestimmten Abstand (17) angeordnet sind, wobei jedes Schallwandlerpaar einen Sender (20) und einen Empfänger (30) umfaßt, die eine Meßspur definieren,
- der Abstand (17) zwischen den Schallwandlerpaaren (20, 30) groß im Vergleich zu dem Abstand (16) der Innenflächen (11, 12) ist und der Abstand (16) der Innenflächen (11, 12) so gewählt ist, dass der von dem Blattgut (1) reflektierte Schallanteil (4) zwischen einer Innenfläche und dem Blattgut mehrmals reflektiert wird, wobei mit zunehmender Anzahl der Reflexionen die Schallintensität stark abnimmt und **dadurch** die Leistung des Schallanteils, der in eine benachbarte Meßspur gelangen kann, vernachlässigbar ist.

2. Vorrichtung nach Anspruch 1, **dadurch gekennzeichnet, daß** der Sender (20) den Schall (3) mit einem geringen Öffnungswinkel derart abstrahlt, daß die Schallwellen (3) nicht direkt auf die den Schall reflektierenden Innenflächen (11, 12) des Transportkanals (10) auftreffen.

3. Vorrichtung nach Anspruch 1, **dadurch gekennzeichnet, daß** die Transporteinrichtung Transportrollen (14) umfaßt, die in den Transportkanal (10) hineinragen und das Blattgut (1) von den Transportrollen in dem Transportkanal bewegt wird.

4. Vorrichtung nach einem der Ansprüche 1 bis 3, **dadurch gekennzeichnet, daß** der Abstand (17) zwischen zwei benachbarten Schallwandlerpaaren (20, 30) im Vergleich zu dem Abstand (16) der Innenflächen (11, 12) des Transportkanals so groß ist, daß der von dem Blattgut (1) reflektierte Schallanteil (4) innerhalb des Transportkanals (10) mehrmals reflektiert wird und bei jeder Reflexion dieser Schallanteil (4) gestreut wird, wodurch die Schallintensität stark abnimmt und **dadurch** die Leistung des Schallanteils (4), der in die Meßspur eines benachbarten Schallwandlerpaares (20,30) gelangen kann, in Bezug auf das Meßergebnis vernachlässigbar ist.

5. Vorrichtung nach Anspruch 4, **dadurch gekennzeichnet, daß** der Abstand (16) der Innenflächen (11, 12) 1 mm bis 5 mm beträgt.

6. Vorrichtung nach Anspruch 5, **dadurch gekennzeichnet, daß** der Abstand (17) zwischen zwei benachbarten Schallwandlerpaaren (20, 30) mindestens 5 mal so groß ist wie der Abstand (16) der Innenflächen (11,12) des Transportkanals (10).

7. Vorrichtung nach Anspruch 1 mit einer Ultraschallwandleranordnung mit wenigstens einem Wandler (20), **dadurch gekennzeichnet, daß** der Wandler (20) auf der der schallabstrahlenden bzw. schallempfangenden Seite gegenüberliegenden Seite des Wandlers auf einem elastischen Element (41) angeordnet und von einem Gehäuse (50, 52) umgeben ist, wobei der Wandler durch das elastische Element und das Gehäuse in einer definierten Position gehalten wird.

8. Vorrichtung nach Anspruch 7, **dadurch gekennzeichnet, daß** das Gehäuse (50) zur Prüfebene wenigstens einen offenen Einschub (51) zur Aufnahme des Wandlers und Noppen (52) zur Positionierung des Wandlers aufweist.

9. Vorrichtung nach Anspruch 8, **dadurch gekennzeichnet, daß** die Einschübe (51) in Form eines Hohlzylinders ausgebildet sind, dessen Durchmesser größer als der Durchmesser des Wandlers (20) ist und das Gehäuse auf der der Prüfebene zugewandten Seite in den Hohlraum (51) hineinragende Noppen (52) aufweist, die den Wandler in seiner Position fixieren.

10. Vorrichtung nach Anspruch 7, **dadurch gekennzeichnet, daß** das elastische Element (41) auf der dem Wandler (20) abgewandten Seite auf einer Platine (40) angeordnet ist, wobei die Anschlüsse des Wandlers elektrisch leitend mit der Platine verbunden sind.

11. Vorrichtung g nach Anspruch 10, **dadurch gekennzeichnet, daß** das Gehäuse (50) lösbar mit der Platine (40) verbunden ist.

12. Vorrichtung nach Anspruch 7, **dadurch gekennzeichnet, daß** mehrere Wandler (20) nebeneinander in einem bestimmten Abstand (17) in dem Gehäuse (50) angeordnet sind.

13. Vorrichtung gemäß Anspruch 12, **dadurch gekennzeichnet, daß** die Wandler (20) durch ein gemeinsames elastisches Element (41) oder durch einzelne elastische Elemente (41) im Gehäuse positioniert sind.

## Claims

1. An apparatus for testing sheet material, in particular bank notes, comprising a device (14) for transporting the sheet material (1) in a defined direction (2), at least one transducer pair (20, 30) with a transmitter (20) which exposes the sheet material (1) to soundwaves (3) and a receiver (30) which detects the sound fraction (4) transmitted through the sheet material, whereby transmitter and receiver are arranged obliquely relative to each other with respect to the transport plane, whereby
- there is provided a transport channel (10) which has openings (13) through which the sound (3) emitted by the transmitter (20) impinges on the sheet material moved within the transport channel by the transport device (14), and the sound fraction (5) transmitted through the sheet material reaches the receiver (30), whereby the sound fraction (4) reflected by the sheet material (1) is limited in its propagation by at least one of the sound-reflecting inner surfaces (11, 12) of the transport channel arranged parallel at a certain distance (16), such that said sound fraction (4) cannot reach the receiver (30) during the irradiation of the sheet material,
- there are arranged perpendicular to the transport direction (2) along the transport channel (10) several transducer pairs (20, 30) side by side at a certain distance (17), whereby each transducer pair comprises a transmitter (20) and a receiver (30) which define a measuring track,
- the distance (17) between the transducer pairs (20, 30) is great in comparison with the distance (16) between the inner surfaces (11, 12), and the distance (16) between the inner surfaces (11, 12) is selected so that the sound fraction (4) reflected by the sheet material (1) is reflected several times between an inner surface and the sheet material, whereby with an increasing number of reflections the sound intensity decreases greatly, thereby causing the power of the sound fraction that can pass into a neighboring measuring track to be negligible.

2. The apparatus according to claim 1, **characterized in that** the transmitter (20) emits the sound (3) with a low aperture angle such that the soundwaves (3) do not impinge directly on the sound-reflecting inner surfaces (11, 12) of the transport channel (10).

3. The apparatus according to claim 1, **characterized in that** the transport device comprises transport rollers (14) protruding into the transport channel (10), and the sheet material (1) is moved within the transport channel by the transport rollers.

4. The apparatus according to any of claims 1 to 3, **characterized in that** the distance (17) between two neighboring transducer pairs (20, 30) is so great in comparison with the distance (16) between the inner surfaces (11, 12) of the transport channel that the sound fraction (4) reflected by the sheet material (1) is reflected several times within the transport channel (10) and at each reflection said sound fraction (4) is scattered, thereby causing the sound intensity to decrease greatly and thus the power of the sound fraction (4) that can pass into the measuring track of a neighboring transducer pair (20, 30) to be negligible with regard to the measurement result.

5. The apparatus according to claim 4, **characterized in that** the distance (16) between the inner surfaces (11, 12) is 1 mm to 5 mm.

6. The apparatus according to claim 5, **characterized in that** the distance (17) between two neighboring transducer pairs (20, 30) is at least five times as great as the distance (16) between the inner surfaces (11, 12) of the transport channel (10).

7. The apparatus according to claim 1 having an ultrasonic transducer assembly having at least one transducer (20), **characterized in that** the transducer (20) is arranged on an elastic element (41) on the side of the transducer opposite the sound-emitting or sound-receiving side and is surrounded by a housing (50, 52), whereby the transducer is held in a defined position by the elastic element and the housing.

8. The apparatus according to claim 7, **characterized in that** the housing (50) has toward the testing plane at least one open insert (51) for receiving the transducer and knobs (52) for positioning the transducer.

9. The apparatus according to claim 8, **characterized in that** the inserts (51) are configured in the form of a hollow cylinder whose diameter is greater than the diameter of the transducer (20), and the housing has knobs (52) protruding into the cavity (51) on the side facing the testing plane, said knobs fixing the transducer in position.

10. The apparatus according to claim 7, **characterized in that** the elastic element (41) is arranged on a board (40) on the side facing away from the transducer (20), whereby the connections of the transducer are connected electroconductively with the board.

11. The apparatus according to claim 10, **characterized in that** the housing (50) is connected detachably with the board (40).

12. The apparatus according to claim 7, **characterized in that** several transducers (20) are arranged side by side at a certain distance (17) in the housing (50).

13. The apparatus according to claim 12, **characterized in that** the transducers (20) are positioned in the housing by a common elastic element (41) or by individual elastic elements (41).

## Revendications

1. Dispositif destiné à l'examen de produit en feuilles, notamment de billets de banque, comprenant un équipement pour le transport (14) du produit en feuilles (1) dans une direction définie (2), au moins une paire de transducteurs acoustiques (20, 30) comportant un émetteur (20) qui applique des ondes acoustiques (3) sur le produit en feuilles (1) et un récepteur (30) qui détecte le taux de sons (4) transmis à travers le produit en feuilles, l'émetteur et le récepteur étant agencés obliquement l'un par rapport à l'autre relativement au plan de transport,
- un canal de transport (10) étant prévu, qui est pourvu d'ouvertures (13) à travers lesquelles le son (3) émis par l'émetteur (20) entre en impact avec le produit en feuilles mû dans le canal de transport par l'équipement de transport (14) et à travers lesquelles le taux de sons (5) transmis par le produit en feuilles accède au récepteur (30), la propagation du taux de sons (4) réfléchi par le produit en feuilles (1) étant limité de telle manière par au moins une des surfaces intérieures (11, 12) du canal de transport agencées parallèlement, à un espacement déterminé (16) et réfléchissant le son, que ce taux de sons (4) ne peut pas accéder au récepteur (30) durant l'exposition du produit en feuilles à l'action des sons,
- plusieurs paires de transducteurs acoustiques (20, 30) étant agencées les unes à côté des autres à un espacement déterminé (17) perpendiculairement à la direction de transport (2) le long du canal de transport (10), chaque paire de transducteurs acoustiques comportant un émetteur (20) et un récepteur (30) qui définissent une piste de mesure,
- l'espacement (17) entre les paires de transducteurs acoustiques (20, 30) étant grand en comparaison avec l'espacement (16) des surfaces intérieures (11, 12), et l'espacement (16) des surfaces intérieures (11, 12) étant sélectionné de telle façon que le taux de sons (4) réfléchi par le produit en feuilles (1) est réfléchi plusieurs fois entre une surface intérieure et le produit en feuilles, l'intensité acoustique diminuant considérablement avec le nombre croissant de réflexions, et la puissance du taux de sons pouvant accéder dans une piste de mesure avoisinante étant donc négligeable.

2. Dispositif selon la revendication 1, **caractérisé en ce que** l'émetteur (20) émet le son (3) avec un angle d'ouverture faible de telle manière que les ondes acoustiques (3) n'entrent pas directement en impact avec les surfaces intérieures (11, 12) du canal de transport (10) qui réfléchissent le son.

3. Dispositif selon la revendication 1, **caractérisé en ce que** l'équipement de transport comprend des rouleaux de transport (14) qui font saillie dans le canal de transport (10), et **en ce que** le produit en feuilles (1) est mû par les rouleaux de transport dans le canal de transport.

4. Dispositif selon une des revendications de 1 à 3, **caractérisé en ce que** l'espacement (17) entre deux paires de transducteurs acoustiques (20, 30) avoisinantes est de telle dimension en comparaison avec l'espacement (16) des surfaces intérieures (11, 12) du canal de transport que le taux de sons (4) réfléchi par le produit en feuilles (1) est réfléchi plusieurs fois à l'intérieur du canal de transport (10) et que ce taux de sons (4) est diffusé à chaque réflexion, ce qui a pour effet de diminuer considérablement l'intensité acoustique de telle sorte que la puissance du taux de sons (4) pouvant accéder dans la piste de mesure d'une paire de transducteurs acoustiques (20, 30) avoisinante est négligeable en ce qui concerne le résultat de mesure.

5. Dispositif selon la revendication 4, **caractérisé en ce que** l'espacement (16) des surfaces intérieures (11, 12) est d'1 mm à 5 mm.

6. Dispositif selon la revendication 5, **caractérisé en ce que** l'espacement (17) entre deux paires de transducteurs acoustiques (20, 30) avoisinantes est au moins 5 fois plus grand que l'espacement (16) des surfaces intérieures (11, 12) du canal de transport (10).

7. Dispositif selon la revendication 1 comprenant un agencement de transducteurs ultrasoniques comportant au moins un transducteur (20), **caractérisé en ce que** le transducteur (20) est agencé sur un élément élastique (41) du côté du transducteur opposé par rapport au côté émettant ou recevant le son et est enceint par un boîtier (50, 52), le transducteur étant maintenu par l'élément élastique et par le boîtier dans une position définie.

8. Dispositif selon la revendication 7, **caractérisé en ce que** le boîtier (50) présente vers le plan d'examen au moins un tiroir ouvert (51) pour la réception du transducteur et des picots (52) pour le positionnement du transducteur.

9. Dispositif selon la revendication 8, **caractérisé en ce que** les tiroirs (51) sont réalisés sous forme d'un cylindre creux dont le diamètre est supérieur à celui du transducteur (20), et **en ce que** le boîtier présente du côté orienté vers le plan d'examen des picots (52) faisant saillie dans la cavité (51) et fixant le transducteur dans sa position.

10. Dispositif selon la revendication 7, **caractérisé en ce que** l'élément élastique (41) est agencé sur une platine (40) du côté opposé au transducteur (20), les branchements du transducteur étant reliés à la platine de manière électroconductrice.

11. Dispositif selon la revendication 10, **caractérisé en ce que** le boîtier (50) est relié à la platine (40) de manière amovible.

12. Dispositif selon la revendication 7, **caractérisé en ce que** plusieurs transducteurs (20) sont agencés dans le boîtier (50) les uns à côté des autres à un espacement déterminé (17).

13. Dispositif selon la revendication 12, **caractérisé en ce que** les transducteurs (20) sont positionnés dans le boîtier par un élément élastique (41) commun ou par des éléments élastiques (41) distincts.
